**Europäisches Patentamt**

**European Patent Office**

**Office européen des brevets**

(19)

(11) Veröffentlichungsnummer: **0 096 198**
**B1**

(12) # EUROPÄISCHE PATENTSCHRIFT

(45) Veröffentlichungstag der Patentschrift:
02.09.87

(21) Anmeldenummer: **83103766.8**

(22) Anmeldetag: **19.04.83**

(51) Int. Cl.⁴: **F 16 L 51/02**

(54) **Rohrgelenkstück.**

(30) Priorität: **03.06.82 DE 3220811**

(43) Veröffentlichungstag der Anmeldung:
**21.12.83 Patentblatt 83/51**

(45) Bekanntmachung des Hinweises auf die Patenterteilung:
**02.09.87 Patentblatt 87/36**

(84) Benannte Vertragsstaaten:
**AT CH FR GB IT LI**

(56) Entgegenhaltungen:
**FR-A-1 303 514**
**FR-A-2 106 751**
**FR-A-2 247 664**
**GB-A-2 034 843**

(73) Patentinhaber: **IWK Regler und Kompensatoren
GmbH, Singerstrasse, D-7513 Stutensee (DE)**

(72) Erfinder: **Nonnenmacher, Wilfried,
Schwarzwaldstrasse 1, D-7537 Remchingen- Wi.
(DE)**

(74) Vertreter: **Dr.- Ing. Hans Lichti Dipl.- Ing. Heiner
Lichti Dipl.- Phys. Dr. Jost Lempert, Postfach 41
07 60 Durlacher Strasse 31, D-7500 Karlsruhe 41
(DE)**

**Beschreibung**

Die Erfindung betrifft ein Rohrgelenkstück mit mindestens zwei jeweils zwischen zwei Rohrabschnitten angeordneten Balgkörpern, wobei die Rohrabschnitte jeweils einen Armteil aufweisen und zwei Armteile benachbarter Rohrabschnitte gelenkig miteinander verbunden sind.

Ein gattungsgemäßes Rohrgelenkstück ist aus der FR-A-21 06 751 bekannt. Es besteht aus zwei Balgkörpern, die über einen zwischen diesem angeordneten Rohrabschnitt miteinander verbunden sind und die an ihren einander abgewandten Enden Rohranschlußstücke aufweisen. Letztere sind mit Ringflanschen versehen, auf denen jeweils ein Riegel aufgeschweint ist, der als Zwischenstück für über und unter ihm angeordnete Armteile dient, wobei die auf der dem Rohr zugewandten Seite befindlichen Armteile länger als die auf der dem Rohr abgewandten Seite der Riegel sind. Die Armteile sind jeweils paarweise durch Bolzen miteinander verbunden, an denen wiederum Armteile gelenkig angelenkt sind, die über Ringflansche am zwischengeordneten Rohrabschnitt fest verschweißt sind. Am Ende eines überragenden Armteils sind zwei mit Abstand zueinander sich parallel erstreckende Verlängerungen angeschweißt, die einen Bolzen halten, der von einer Gabelausnehmung von den anderen überragenden Armteilen umgriffen wird. Da der Bolzen an einem Armteil befestigt ist, ändert sich bei angularer Auslenkung die Länge des anderen Armteils von seinem Befestigungspunkt bis zu seinem Angriff am Bolzen, so daß sich unterschiedliche Winkelauslenkungen bei den beiden vorgesehenen Balgkörpern ergeben, was zur Folge hat, daß ein Balg anders beansprucht wird als der andere was insbesondere aufgrund der Dauerbelastung Auswirkungen hinsichtlich der unterschiedlichen Lebensdauer der Bälge hat.

Der Erfindung liegt daher die Aufgabe zugrunde, ein Rohrgelenkstück der gattungsgemäßen Art unter Verminderung des konstuktiven Aufwandes derart weiterzubilden, daß bei einfacher Übertragung auch axialer Kräfte eine gleichmäßige Belastung, insbesondere Angularbelastung der beiden Balgkörper im Dauerbetrieb gegeben ist.

Zur Lösung der genannten Aufgabe sieht die Erfindung ein Rohrgelenkstück nach dem Anspruch 1 vor. Die Erfindung bietet weiter die Möglichkeit einer einfachen bausatzartigen Hintereinanderanordnung mehrerer Balgkörper.

Die Erfindung ermöglicht also insbesondere eine wesentliche Vergrößerung des Winkelausschlags im Rahmen einer vorgegebenen Knickfestigkeit, die im allgemeinen im Hinblick auf die Betriebsbedingungen durch die Geometrie des einzelnen Balgkörpers bestimmt wird. Bei dem erfindungsgemäßen Rohrgelenkstück können mehrere bis zum zulässigen Knickdruck beanspruchte Bälge eingesetzt werden; eine Überbeanspruchung eines Balges wird vermieden. Es werden insbesondere alle Balgkörper im wesentlichen gleichmäßig beansprucht. Die erfindungsgemäße Lösung weist den hohen Vorteil auf, daß so der Winkel der insgesamt durch das Rohrgelenkstück aufgenommen wird, praktisch beliebig sein kann. Ein erfindungsgemäß ausgestaltetes Rohrgelenkstück kann zwei oder mehrere Balgkörper aufweisen. Schon mit drei Balgkörpern kann beispielsweise ein Winkel von über 45° aufgenommen werden. Die Bälge werden gleichmäßig belastet. Durch die Erfindung wird eine äußerst zuverlässige gleichmäßige Bewegung gewährleistet, d.h. ein auf einem Balg ausgeübtes Winkelmoment, das diesen zu einer Winkelbewegung veranlaßt, wird unmittelbar auf die anderen Balgkörper mit übertragen, so daß alle Balgkörper aufgrund des angreifenden Winkelmoments jeweils die gleiche Winkelbewegung aufnehmen und nicht einer diese voll aufnehmen muß, während die anderen Balgkörper noch nicht belastet würden.

Grundsätzlich kann weiterhin vorgesehen sein, daß zur Begrenzung der Winkelbeweglichkeit der Armteile Anschläge vorgesehen sind. Soweit an den Enden der über ein zwischengeordnetes Armteil verbundenen Armteile gelenkige Formschluß-Verbindungen in der oben erwähnten Weise vorgesehen sind, sind die Anschläge eine bevorzugte zusätzliche Sicherheit, de überlicherweise die Winkelbeweglichkeit des gesamten Gelenkkompensators derart ausgelegt wird, daß er in einem System die an ihn angreifenden maximalen Winkelmomente vollständig aufnehmen kann, ohne daß er insgesamt überbeansprucht wird.

Insbesondere kann aber auch vorgesehen sein, daß die Anschläge im Bereich der Gelenkstellen ausgebildet sind, beispielsweise indem Gelenkbolzen mit einem seitlichen Ansatz versehen sind, der in einer Nut seitlich seines Durchführungsloches in einem Anteil in einem bestimmten Winkelbereich beweglich ist und so die Relativ-Winkelbewegung der beiden an dieser Gelenkstelle verbundenen Anteile begrenzt. Insbesondere können die Anschläge auch durch Langlöcher gebildet sein, die eine Axialbeweglichkeit von Gelenkverbindungselementen gewährleisten.

Falls ein Außereingriffkommen der Zähnungen bei Auslenkung über die maximal zulässige Knickbeanspruchung der Balgkörper hinaus verhindert werden soll, wobei dann die Verzahnungen außer Eingriff kämen, so kann ein Anschlag entweder im Bereich der Zähnungen oder aber im Bereich der Gelenkverbindungen vorgesehen sein, der die relative Winkelbewegung zweier miteinander gelenkig verbundener Armteile in einem bestimmten Bereich begrenzt.

Weitere Vorteile und Merkmale der Erfindung ergeben sich aus den Ansprüchen und aus der nachfolgenden Beschreibung, in der Ausführungsbeispiele des erfindungsgemäßen Rohrgelenkstücks im einzelnen erläutert sind. Dabei zeigt:

Figur 1 eine erste Ausgestaltung des erfindungsgemäßen Rohrgelenkstücks in geschnittener Teildarstellung;

Figur 2 eine Aufsicht auf die Ausgestaltung der Figur 1 in gerader Anordnung;

Figur 3 eine Aufsicht entsprechend der Figur 2 in gewinkelter Stellung;

Figur 4 eine andere Ausführungsform des erfindungsgemäßen Rohrgelenkstücks in geschnittener Teildarstellung ähnlich der Figur 1;

Figur 5 eine Aufsicht auf die Ausgestaltung der Figur 4 in gestreckter Darstellung;

Figur 6 eine Aufsicht auf die Ausgestaltung der Figuren 4 und 5 in abgewinkelter Stellung;

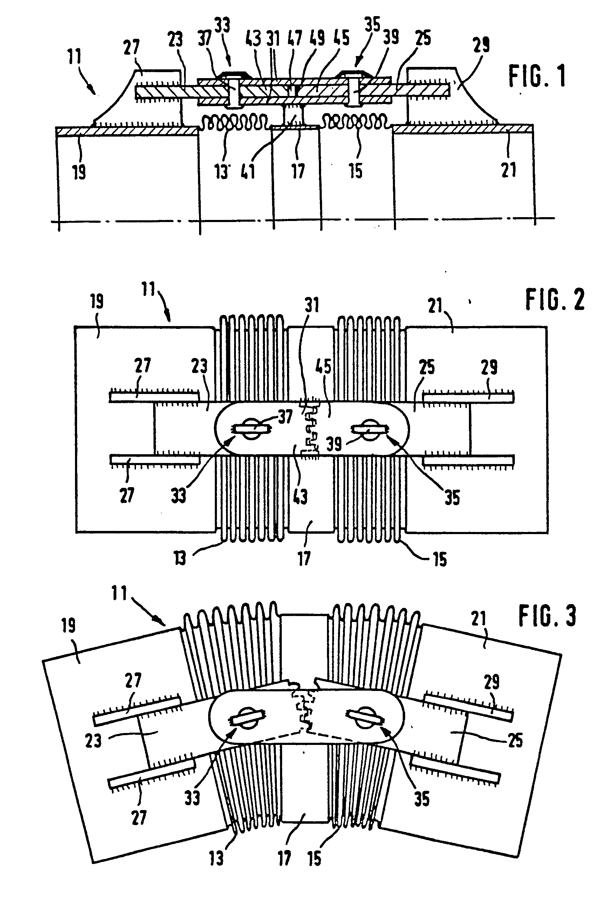

Das in der Figur 1 dargestellte Rohrgelenkstück 11 weist zwei Balgkörper 13, 15 auf die einerseits durch einen Rohrabschnitt 17 miteinander verbunden sind und andererseits an ihren voneinander weggerichteten Enden Rohranschlußstücke 19, 21 aufweisen.

An den Rohranschlußstutzen 19, 21 sind aufeinander zugerichtete Armteile 23, 25, beispielsweise über Befestigungselemente 27, 29, wie Befestigungs-Platten, -Stege oder Flansche der Rohranschlußstücke 19, 21 befestigt. Während im dargestellten Ausführungsbeispiel nur jeweils ein Armteil 23, 25 sichtbar ist, ist eine ebensolche Ausgestaltung auch diametral gegenüber auf der anderen Seite des Rohrgelenkstücks 11 vorgesehen. Die Armteile 23, 25 sind zunächst in an sich bekannter Weise durch ein weiteres Armteil oder genauer Doppel-Arm 31 gelenkig miteinander verbunden, das zwischen den Armteilen 23, 25 angeordnet und mit diesen an Gelenkstellen 33, 35 über Gelenkverbindungen 37, 39 verbunden sind. Die Gelenkverbindungen 37, 39 sind mittelbare Gelenkverbindungen, die durch Bolzen vermittelt werden. Das Armteil 31 kann, wie in der Figur 1 dargestellt, über einen Steg 41 mit dem mittleren Rohrabschnitt 17 verbunden sein. Erfindungsgemäß ist nun weiter vorgesehen, daß die Armteile 23, 25 über die Gelenkstellen 33, 35 hinaus aufeinander zu verlangerte Enden 43, 45 aufweisen. Diese Enden sind weiterhin mit miteinander kämmenden Zähnungen 47, 49 versehen, die als unmittelbare gelenkige Formschlußverbindung miteinander kämmen, wie am besten aus den Figuren 2 und 3 ersichtlich ist. Durch diese Ausgestaltung wird gewährleistet, wie die Figur 3 deutlich zeigt, daß bei einem auf ein oder beide Rohranschlußstücke 19, 21 wirkendes Winkelmoment beide Balgkörper 13, 15 in gleicher Weise zur Aufnahme des Winkelmoments und damit zur Biegung veranlaßt werden, da eine relative Winkelbewegung beispielsweise der Armteile 31 und 25 durch die Zähnungsverbindung 47, 49 der Armteile 23, 25 eine ebensolche entsprechende relative Winkelbewegung der Armteile 23 und 31 bedingt. Es wird daher vermieden, daß eine vorgegebene Winkelbewegung zwischen den Rohranschlußstücken 19, 21 vollständig auf einen Kompensator übertragen wird und einer der beiden Balgkörper 13, 15 früher ermüdet. Es wird auch vermieden, daß bei einer Bewegung ein Balgkörper überbeansprucht wird und praktisch ausbricht, wodurch er zerstört würde.

Durch die erfindungsgemäße Ausgestaltung eines Rohrgelenkstücks wird ohne großen Aufwand, wie er bei mehrlagigen Bälgen notwendig ist, in einfacher Weise ein für große Winkelbewegungen geeignetes und aufgrund der gleichen Beanspruchung der einzelnen Balgkörper langlebiges Rohrgelenkstück geschaffen das im übrigen entsprechend der notwendigerweise maximal aufzunehmenden Winkelbewegung bei einem bestimmten Problem in bausatzartiger Weise hergestellt werden kann, indem einfach die Anzahl der hintereinander angeordneten Balgkörper in einem Rohrgelenkstück vergrößert wird, wobei die Anzahl der Balgkörper, bestimmt durch ihre zulässige Knickbeanspruchung proportional zum gewünschten Winkel verläuft. Durch die erfindungsgemäße Ausgestaltung des Rohrgelenkstücks, das eine gleichmäßige Auslenkung und Beanspruchung sämtlicher Balgkörper gewährleistet, wird eine solche Hintereinanderanordnung von mehreren Balgkörpern, insbesondere über die Anzahl zwei hinausgehenden erst möglich.

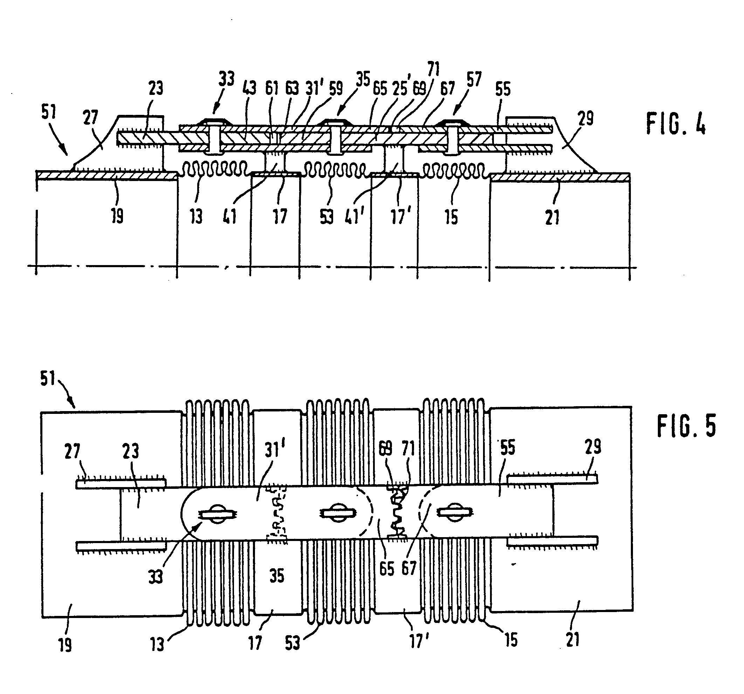

Die bausteinartige Erweiterung von Rohrgelenkstücken ist in den weiteren Figuren ersichtlich. In den Figuren 4 bis 6 ist eine andere Ausgestaltung eines erfindungsgemäßen Rohrgelenkstücks 51 dargestellt, wobei hier bei diesem Gelenkkompensator 51 gleiche Elemente wie beim Rohrgelenkstück der Figuren 1 bis 3 mit grundsätzlich gleichen oder entsprechenden Bezugszeichen versehen werden. Das Rohrgelenkstück 51 weist drei Balgkörper 13, 15, 53 auf, wobei die außenliegenden Balgkörper 13, 15 an ihren voneinander fort gerichteten Seiten mit den Rohranschlußstücken 19, 21 versehen sind. Zwischen den einzelnen Balgkörpern sind Rohrabschnitte 17 und 17' zwischengeschaltet. Mit dem Rohranschlußstück 19 ist das gleiche Armteil 23 verbunden, wie bei der ersten Ausführungsform. Mit dem Rohranschlußstück 21 ist über ein Befestigungselement 29 ein Doppel-Armteil 55 verbunden, das auf das Armteil 23 zugerichtet ist. Das am Rohranschlußstück 19 befestigte Armteil 23 ist an der Gelenkstelle 33 mit einem Armteil 31' verbunden, welches über einen Steg 41 auf dern Rohrabschnitt 17 abgestützt ist. Das Arnteil 31' ist seinerseits wieder über eine Gelenkstelle 35 mit einem mittels eines Stegs 41' auf dem Rohrabschnitt 17' abgestützten Armteil 25' gelenkig verbunden. Schließlich sind das schon erwähnte am Rohranschlußstück 21 befestigte Armteil 55 und das Armteil 25' über eine Gelenkstelle 57 gelenkig miteinander verbunden. Schon eine solche Ausgestaltung ist neu. Bei ihr besteht aber die erhöhte Gefahr, daß ein Balgkörper 13, 15, 53 entweder dauernd oder bei einer Bewegung überbelastet und daher vorzeitig oder plötzlich beschädigt wird. Zur praktischen Verwirklichung eines solchen Rohrgelenkstücks mit drei hintereinander angeordneten Balgkörpern sieht daher die Erfindung weiterhin vor, daß in der schon beschriebenen Weise zunächst das Armteil 23 ein über den Gelenkpunkt 33 hinausragendes Ende 43 aufweist und gleichzeitig das Armteil 25' ein über die Gelenkstelle 35 auf das Armteil 23 zu hinaus reichendes Ende 59 hat. Die Enden 43 und 59 sind wiederum mit halbbogenförmigen Zähnungen 61, 63 versehen, die miteinander kämmen.

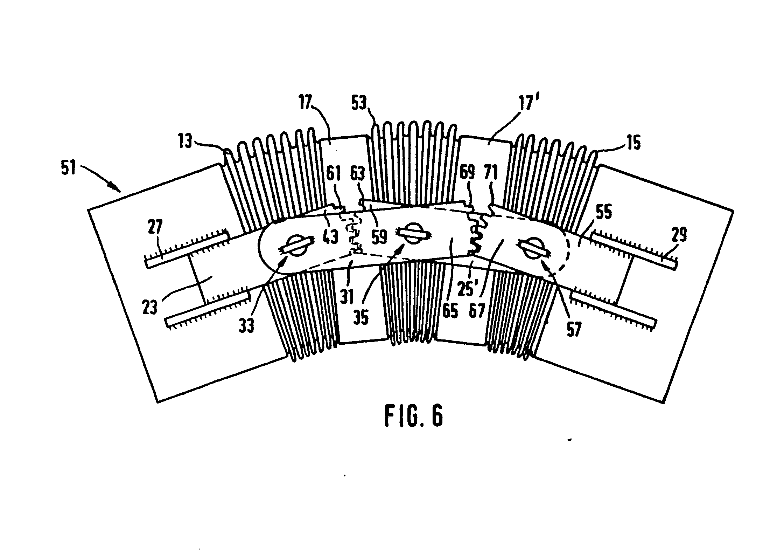

In gleicher Weise sind die Armteile 31' und 55 über die Gelenkstellen 35 bzw. 57 mit aufeinander zu verlängerten Enden 65, 67 versehen, die ebenfalls mit miteinander kämmenden Zähnungen 69, 71 versehen sind. Hierdurch wird, wie aus der Figur 6 erkennbar ist, bei einem einwirkenden Winkelmoment wiederum gewährleistet, daß sämtliche Balgkörper 13, 15, 53 die gleiche Winkelbewegung aufnehmen, indem beispielsweise bei einem Abknicken des Rohranschlußstücks 21 über die Zähnungen 69, 71 der Balg 53 veranlaßt wird, die gleiche Winkelbewegung aufzunehmen wie der Balg 15 und weiterhin über die Zähnungen 61, 63 auch auf den Balg 13 derart eingewirkt wird, daß er eine den Winkelbewegungen der Balgkörper 53, 15 gleiche Winkelbewegung aufnimmt. Die dargestellte Ausführungsform kann insgesamt ohne weiteres einen Winkelbereich von über 45° zwischen ihren Endstellungen aufnehmen bzw. überstreichen.

In Weiterbildung des Erfindungsgedankens können bei einem Rohrgelenksstück insbesondere auch vier Balgkörper vorgesehen sein. Aufgrund der erfindungsgemäßen Ausgestaltung, durch die Auslenkung jedes einzelnen Balges bestimmt bleibt und insbesondere alle Balgkörper in einem Rohrgelenkstück die gleiche Ablenkung bedingen, können ohne weiteres Kompensatoren mit noch mehr Balgkörpern und Gelenkteilen hergestellt werden, als dies bei dem Rohrgelenkstück der Figuren 4 bis 6 der Fall ist, wobei jedes mal zwei Armteile, die zunächst über ein zwischengeordnetes Armteil miteinander verbunden sind, mit über die Gelenkstellen zum zwischengeordneten Armteil aufeinander zu verlängerten Enden direkt miteinander in beweglicher Verbindung stehen, die in bevorzugter Weise eine Verzahnung ist.

**Patentansprüche**

1. Rohrgelenkstück mit mindestens zwei jeweils zwischen zwei Rohrabschnitten (17, 17', 19, 21) angeordneten Balgkörpern (13, 15, 53), wobei die Rohrabschnitte (17, 17', 19,21) jeweils einen Armteil (31, 31', 25', 23, 25, 55) aufweisen und zwei Armteile (23, 25, 25', 31, 31', 55) benachbarter Rohrabschnitte (17, 17', 19, 21) gelenkig miteinander verbunden sind, dadurch gekennzeichnet,daß jeder zwischen zwei Balgkörpern (13, 15, 53) angeordnete Rohrabschnitt (17, 17') von seinem Armteil (31, 31' 25') vollständig überragt wird und daß zwei Armteile (31, 31', 25', 23, 25) an Rohrabschnitten (17, 17', 19, 21), die durch einen Rohrabschnitt (17, 17') und zwei Balgkörper (13, 15, 53) getrennt sind, derart durch an den Enden ausgebildete, miteinander kämmende Zähnungen (47, 49; 61, 63 bzw. 69, 71) winkeltreu miteinander verbunden sind, daß die Auslenkung der Balgkörper (13, 15, 53) bei jeder Gesamtauslenkung übereinstimmt.

2. Rohrgelenkstück nach Anspruch 1, dadurch gekennzeichnet, daß zur Begrenzung der Winkelbeweglichkeit der Armteile (23, 25; 31, 25', 31', 55) Anschläge vorgesehen sind.

3. Rohrgelenkstück nach Anspruch 2, dadurch gekennzeichnet, daß die Anschläge im Bereich der Gelenkstellen (33, 35, 57) ausgebildet sind.

4. Rohrgelenkstück nach Anspruch 2 oder 3, dadurch gekennzeichnet, daß die Anschläge durch Langlöcher oder Gabeln gebildet sind, die eine Axialbeweglichkeit von Gelenkverbindungselementen gewährleisten.

5. Rohrgelenkstück nach Anspruch 4, dadurch gekennzeichnet, daß die Anschläge im Bereich der Formschluß-Verbindungen (47, 49; 61, 63 bzw. 69, 71) ausgebildet sind.

**Claims**

1. Articulated pipe section with at least two bellows (13, 15, 53) in each case arranged between two pipe portions (17, 17' 19, 21) each of which has an arm part (31, 31', 25', 23, 25) and two arm parts (23, 25, 25', 31, 31', 55) of adjacent pipe portions (17, 17', 19, 21) are interconnected in articulated manner, characterized in that each pipe portion (17, 17') arranged between two bellows (13, 15, 53) is completely projected over by its arm part (31, 31', 257) and that two arm parts (31, 31', 25,', 23, 25, 55), which are separated by a pipe portion (17, 17') and two bellows (13, 15, 53), are so interconnected in conformal manner by meshing tooth systems (47, 49, 61, 63) or (69, 71) constructed on the ends, that the deflection of the bellows (13, 15, 53) during each overall deflection coincides.

2. Articulated pipe section according to claim 1, characterized in that stops are provided for limiting the angular mobility of the arm parts, 23, 25, 31, 25', 31' 55).

3. Articulated pipe section according to claim 2, characterized in that the stops are constructed in the vicinity of the articulations (33, 35, 57).

4. Articulated pipe section according to claims 2 or 3, characterized in that the stops are formed by elongated holes or forks, which ensure an axial mobility of articulated connecting elements.

5. Articulated pipe section according to claim 4, characterized in that the stops are constructed in the vicinity of interlocking connections (47, 49, 61, 63 or 69, 71).

## Revendications

1. Section d'articulation comportant au moins deux soufflets (13, 15, 53) disposés respectivement entre deux tronçons de tuyau (17, 17', 19, 21), les tronçons de tuyau (17, 17', 19, 21) comportant respectivement un bras (31, 31', 25', 23, 25, 55) et deux bras (23, 25, 25', 31, 31', 55) de tronçons de tuyau voisins (17, 17', 19, 21) étant articulés ensemble, caractérisée en ce que chaque tronçon de tuyau (17, 17') disposé entre deux soufflets (13, 15, 53) est totalement dépassé par son bras (31, 31', 25'), et en ce que deux bras (31, 31', 25', 23', 25, 55) montés sur les tronçons de tuyau (17, 17', 19, 21) qui sont séparés par un tronçon de tuyau (17, 17') et par deux soufflets (13, 15, 53) sont reliés ensemble, de façon à pivoter du même angle, par des dentures (47, 49; 61, 63 ou 69, 71) formées aux extrémités des bras et engrenant ensemble, de telle sorte que, pour chaque coudage de l'ensemble, les soufflets (13, 15, 53) se cintrent de façon identique.

2. Section d'articulation de tuyaux selon la revendication 1, caractérisée en ce qu'on prévoit des butées pour limiter la mobilité angulaire des bras (23, 25, 31, 25', 31', 55).

3. Section d'articulation de tuyaux selon la revendication 2, caractérisée en ce que les butées sont formées dans la zone des articulations (33, 57).

4. Section d'articulation de tuyaux selon la revendication 2 ou 3, caractérisée en ce que les butées sont constituées par des trous oblongs ou des fourches qui permettent aux éléments articulés de se déplacer axialement.

5. Section d'articulation de tuyaux selon la revendication 4, caractérisée en ce que les butées sont formées dans la zone des liaisons par coopération de formes (47, 49; 61, 63 et 69, 71).

FIG. 1

FIG. 2

FIG. 3

FIG. 4

FIG. 5

FIG. 6